# EUROPEAN PATENT APPLICATION

(11) **EP 2 869 513 A1**
(43) Date of publication of application: **06.05.2015**
(21) Application number: 13190945.9
(22) Date of filing: 30.10.2013
(51) Int. Cl.: H04L 12/801, H04L 12/851, H04L 12/823, H04L 12/70

(54) **Method and network node for controlling sending rates**

(71) Applicant: Telefonaktiebolaget L M Ericsson (Publ), 164 83 Stockholm (SE)
(72) Inventor: Pályi, Pál, 1113 Budapest (HU); Baillargeon, Steve, Gatineau, Québec J8R 3R (CA); Nádas, Szilveszter, 1192 Budapest (HU); Rácz, Sándor, 2700 Cegléd (HU)
(74) Representative: Ström & Gulliksson AB

(57) **Abstract**

The present discloser relates to a method performed by a network node (10; 20; 30; 40) for controlling sending rates in a communications network (2) and also to a network node (10; 20; 30; 40) for performing such a method. The method controls the sending rate by dropping received data packets, if the transport network experiences congestion. If the transport network experiences congestion the received data packets are dropped based on a packet drop precedence value comprised in a radio access network header.

## Description

### TECHNICAL FIELD

Embodiments of the present disclosure generally relate to controlling sending rates in a communications network. More particularly, embodiments disclosed herein relate to methods performed in a network node for controlling sending rates from said network node. Furthermore, embodiments of the present disclosure are also directed to a corresponding network node.

### BACKGROUND

In the field of data and telecommunication the demand for sending larger and larger amounts of data is ever increasing. The demand for streaming movies, music, games etc. steady increases as the communication channels increase their capacity of sending or transmitting data. Even if development over recent years has been fast and the capacity in the different communication channels has doubled many times, there are still bottlenecks due to the large amount of data that is communicated. This leads to more frequent occurrences of network congestion when the offered traffic is higher than what for example a **R**adio **A**ccess **N**etwork, RAN, is able to fulfill. It is today also common with new services, which may lead to situations where new requirements have to be introduced in the network very quickly in respect of a new **Q**uality **o**f **E**xperience, QoE. In this situation operators will need efficient and flexible tools by which they can share and control the RAN capacity and maximize the QoE for their users.

In the current **3**rd **G**eneration **P**artnership **P**roject (3GPP) a **Q**uality **o**f **S**ervice, QoS, is based on a bearer mechanism, e.g. as described in 3GPP TS 23.401 section 4.7.2. Traffic that requires differentiated QoS treatment is classified into bearers. For each bearer, the **Q**oS **C**lass **I**dentifier, QCI, parameter determines the basic QoS treatment. A few other parameters, such as the **M**aximum **B**it**R**ate, MBR, **G**uaranteed **B**it**R**ate, GBR, **U**ser **E**quipment, UE, or **A**ccess **P**oint **N**ame, APN, specific **A**ggregate **M**aximum **B**it**R**ate, AMBR and **A**llocation and **R**etention **P**riority, ARP parameters can further influence the QoS applied to the bearer traffic.

The bearer based QoS has some limitations which has so far prevented its wide adoption. One limitation is that for **3**^{rd} **G**eneration, 3G, the network based QoS mechanism requires the release-7 of the **N**etwork **I**nitiated **D**edicated **B**earer, NIDB, support, which has so far not yet materialized in terminal equipment. Even though new NIDB enabled terminals may come out, it may take a few years before they reach a sufficiently high penetration for operators to make efficient use of the feature.

As another limitation, the QoS parameters as currently defined do not provide a predictable QoE in case of congestions in the communications network. The GBR and MBR parameters only apply to GBR bearers while most of the traffic currently is routed goes over non-GBR bearers. The AMBR parameter only allows enforcement of a maximum over several bearers which is not flexible enough to specify congestion behavior.

There can be many proprietary parameters based on the QCI which are set in the RAN. However, operators typically have equipment from multiple vendors in their network, which makes it difficult to manage vendor specific parameter settings, typically via the **O**perations and **M**aintenance, O&M, system. With proprietary QoS mechanisms, it is hard for the operator to provide a predictable user experience.

There are two common ways of defining and signaling desired resource demands to a bottleneck in the communications network. A bottleneck is a location in the communications network that experiences congestion, for example a location where a single or limited number of components or resources affect the capacity or performance of the communications network.

The first common way is to pre-signal/pre-configure the desired resource sharing rules for a given traffic aggregate, such as a flow or a bearer, to a bottleneck node prior to the arrival of the actual traffic. The bottleneck node may then implement the handling of the traffic aggregates based on these sharing rules, e.g. uses scheduling to accomplish the desired resource sharing. Examples of these pre-signaling/pre-configuration methods are e.g. the bearer concept of 3GPP [3GPP TS 23.401], SIRIG [3GPP TS 23.060 section 5.3.5.3], or Resource Reservation Protocol, RSVP, [RFC2205].

The second common way is to mark packets with drop precedence, which marks the relative importance of the packets compared to each other. Packets of higher drop precedence are to be dropped before packets of lower drop precedence. An example for such method is DiffServ Assured Forwarding, AF, within a given class [RFC2597].

It is an open issue how to signal service policies to different resource bottlenecks, including both transport bottlenecks and radio links. The term service policy in this document denotes instructions on how the available resources at a packet scheduler shall distribute the available, primarily transmission, resources among the packets of various packet flows arriving to the scheduler. The term "*resource sharing ruler*" is used in the same meaning. In the case of radio links, the service policy also needs to define how a terminal dependent radio channel overhead should affect the resource sharing. Such a scheme for signaling should preferably be simple, versatile and fast to adapt to the actual congestion situation.

Pre-signaling/pre-configuration solutions can describe a rich set of different resource sharing policies. However, these policies have to be configured in advance of actual traffic at all bottlenecks, which limits the flexibility of policies, and the pre-configuration of a large number of resource sharing policies also requires resources at each node in order to maintain the polices, which may be costly. Furthermore, the polices have to be signaled before the first packet of the flow arrives, which adds a setup delay and overhead before the first packet can be delivered. In addition, these solutions usually require traffic handling on a per aggregate/flow basis, e.g., separate queues per traffic aggregate/flow and implement a per traffic aggregate/flow resource sharing mechanism. While it in some cases is possible to realize this, e.g. with per bearer handling over air interface, in other cases this puts additional complexity to the system, e.g. over RAN **T**ransport **N**etwork, TN bottlenecks or within bearer differentiation.

The drop precedence marking solutions, as mentioned above, are limited by the interpretation of drop precedence, leading to a limited non-flexible handling of the packets in the communications network.

Furthermore in the transport network of a 3GPP **L**ong-**T**erm **E**volution, LTE, **H**igh Speed **D**ownlink **P**acket **A**ccess, HSDPA, or WiFi system, the support of packet drop precedence is very limited. Either there are only a few drop precedence levels or drop precedence is not supported at all in the transport network. However, the support of several drop precedence levels and in parts of the system is advantageous in order to support end-to-end service policies and congestion control.

In the transport network, which typically operates in the network layer, there is one method available to signal drop precedence, namely the **D**ifferentiated Services Code **P**oint, DSCP, field in the IP header. DSCP defines 3 drop precedence levels; low drop, medium drop and high drop. It is possible to define more drop precedence levels by using several DSCPs. However, this would not be supported by all equipments in the transport network and it might also allocate too many of the DSCPs.

Thus, there is a need for a method for controlling sending rates from a network node depending on the congestion state of in the transport network.

### SUMMARY

An object of embodiments herein is to provide a method for controlling sending rates in a communications network depending on the congestion state in a transport network. The object may be achieved by a method performed by a network node. The method comprises receiving a data packet from a transport network. The received data packet comprises information about a packet drop precedence value and an Explicit Congestion Notification, ECN, flag, comprising information about congestions in the transport network. The method further comprises dropping received data packets in the network node, in response to that the ECN flag indicates that there is a congestion in the transport network and based on the packet drop precedence value. The packet drop precedence value may be indicated in the RAN or IP header.

In various embodiments the method further comprises reading, for each data packet, the RAN or IP header to determine the packet drop precedence value, comparing the read packet drop precedence value with a threshold and forwarding data packets having a packet drop precedence value below the threshold and dropping data packets having a packet drop precedence value above the threshold.

In other embodiments the dropping of received packets in the network node may be equally distributed among the available sending bearers of the network node.

Furthermore the ECN flag may be set by an ECN capable router in the transport network and may comprise two bits, which are set to 11 for indicating congestion in the transport network.

A further object of embodiments herein is to provide a network node for controlling sending rates in a communications network depending on the congestion state in a transport network. The network node comprises a communication interface arranged for wireless communication with a transport network, a processor, a memory storing a software package comprising computer program code which, when run in the processor, causes the network to receive a data packet from the transport network, said data packet comprising information about a packet drop precedence value and an Explicit Congestion Notification, ECN, flag, comprising information about congestions in the transport network; and drop received data packets in the network node, in response to an indication by the ECN flag that there is congestion in the transport network and based on the packet drop precedence value. The packet drop precedence value may be indicated in the RAN or IP header.

In various embodiments the network node may be further caused to read, for each data packet, the RAN or IP header to determine the packet drop precedence value, compare the read packet drop precedence value with a threshold; and forwarding data packets having a packet drop precedence value below the threshold and dropping data packets having a packet drop precedence value above the threshold. The drop of the received data packets may be equally distributed among the available sending bearers of the network node.

Taking into account the state of the transport network, i.e. if there are any congestions or not, is advantageous in order to support end-to-end service polices and congestion control and will also extend the number of drop precedence levels in the transport network.

### BRIEF DESCRIPTION OF THE DRAWINGS

These and other aspects, features and advantages of embodiments of the present disclosure will be apparent and elucidated from the following description of various embodiments, reference being made to the accompanying drawings, in which:
Fig.1 is a schematic diagram illustrating an exemplary environment of a communications network;
Fig. 2 is a schematic diagram illustrating an exemplary network node;
Fig. 3 is a schematic graph illustrating the ECN marking probability depending on queue length;
Fig. 4 is a flow chart illustrating a method performed by a network node according to an exemplary embodiment of the present disclosure;
Fig. 5 is a flow chart illustrating a sub method performed by the network node according to an exemplary embodiment of the present disclosure;
Fig. 6 is a schematic graph illustrating the packet drop probability depending on drop precedence level.

### DETAILED DESCRIPTION

In the following description, for purposes of explanation and not limitation, specific details are set forth, such as particular components, elements, techniques, etc. in order to provide a thorough understanding of the exemplifying embodiments. However, it will be apparent to one skilled in the art that the exemplifying embodiments may be practiced in other manners that depart from these specific details. In other instances, detailed descriptions of well-known methods and elements are omitted so as not to obscure the description of the example embodiments. The terminology used herein is for the purpose of describing the example embodiments and is not intended to limit the embodiments presented herein.

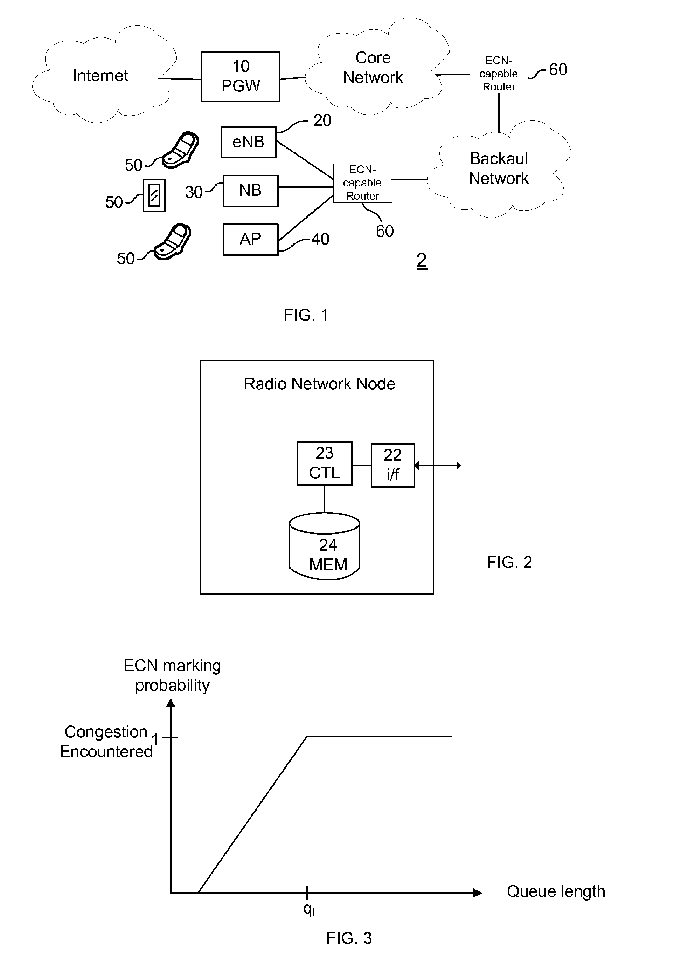

**Figure 1** shows a schematic overview of an exemplifying communications network 2. The network may be a LTE, HSDPA or WiFi based network system or any other present or future communications network. The example embodiments herein may be utilized in connection with all wireless communication systems comprising nodes and functions that correspond to the nodes and functions of the system in Figure 1.

The communications network 2 in figure 1 comprises a **P**acket **G**ate**W**ay, PGW, 10 and base stations or access points, such as an evolved **N**ode **B**, eNB, 20, a **N**ode **B**, NB, 30, and an **A**ccess **P**oint, AP, 40, depending on the type of communications network 2. The functionality of the eNB 20, NB 30 and AP 40 is well known a person skilled in the art and will for the sake of clarity not be repeated here. The communications network 2 further comprises different type of **U**ser **E**quipments 50, such as mobile terminals, tablets, laptop computers etc. In the present disclosure a transport network of the communication network 2 is defined as the network between the PGW 10 and the base station/access points 20, 30 or 40. Among other the transport comprises ECN capable routers 60, which will be closer described below.

The PGW 10 provides connectivity to external **P**acket **D**ata **N**etworks, PDNs, e.g. Internet, to the UE 50 by being the point of exit and entry of traffic for the UE 50. The UE 50 may have simultaneous connectivity with more than one PGW 10 for accessing multiple PDNs. Typically the PGW 10 performs one or more of the following; policy enforcement, packet filtering for each user, charging support, lawful interception and packet screening. Another key role of the PGW 10 is to act as the anchor for mobility between 3GPP and non-3GPP technologies such as **W**orldwide **I**nteroperability for **M**icrowave **A**ccess, WiMAX, and 3GPP2 (**C**ode **D**ivision **M**ultiple **A**ccess, CDMA, 1X and Enhanced **V**oice-**D**ata **O**nly, EvDO). In a **G**eneral **P**acket **R**adio Service, GPRS, network the equivalent of the PGW 10 is the **G**ateway **G**PRS **S**upport **N**ode, GGSN, and is responsible for the interworking between the GPRS network and external packet data networks, like the Internet and X.25 networks.

The ECN aware router 60 is a router that supports explicit congestion notification in order to propagate ECN signals. The ECN signals or ECN flag is carried in the **I**nternet **P**rotocol, IP, header, such as the **G**PRS **T**unneling **P**rotocol for **U**ser Plane GTP-U or the **C**ontrol **A**nd **P**rovisioning of **W**ireless **A**ccess **P**oints, CAPWAP, packet from the transport layer to the user plane layer at eNB 20 or AP 40. ECN is an extension of the IP and **T**ransmission **C**ontrol **P**rotocol, TCP, protocols, as described in "The Addition of Explicit Congestion Notification (ECN) to IP" [RFC 3168] and depending on its settings indicates if there is congestion in the transport network. The ECN flag normally comprises two bites and if the bits are set to 10 or 01 it indicates that there is no congestion in the transport network and if they are set to 11 it indicates that congestion is encountered in the transport network. ECN is an optional feature and is mainly useful at the user plane layer when the TCP endpoints including the UE are capable to use it. The TCP receiver of the ECN signals echoes the congestion indication to the TCP sender which should reduce its transmission rate. ECN may however also be extended to **U**ser **D**atagram **P**rotocol, UDP, traffic as described in Explicit Congestion Notification (ECN) for **R**eal **T**ime **P**rotocol, RTP over UDP [RFC 6679].

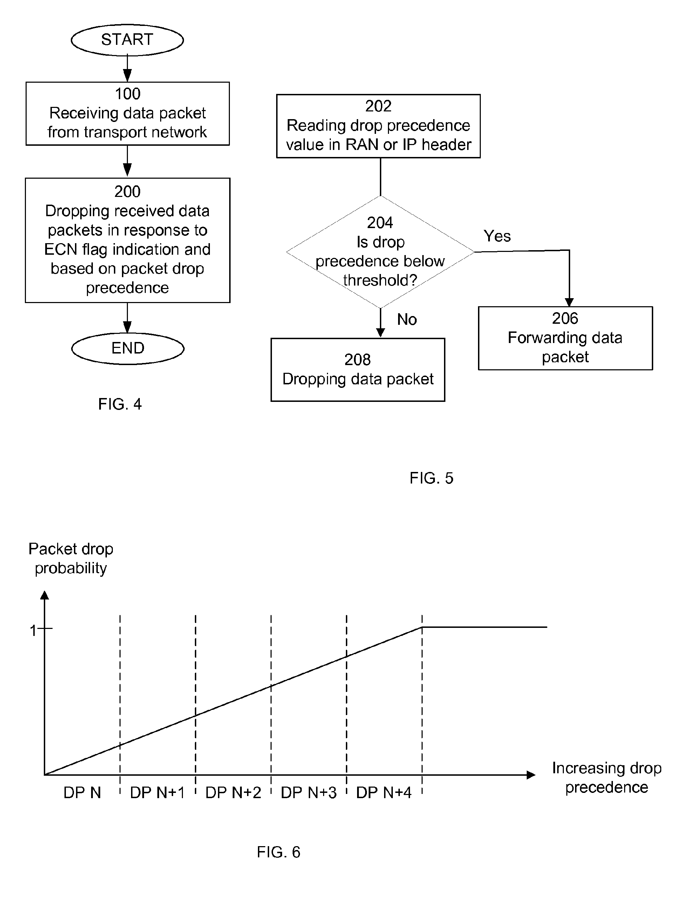

**Figure 2** is a schematic diagram illustrating an exemplary network node, such as the PGW 10, the ENB 20, the NB 30 or the AP 40 depicted in figure 1. The exemplary network node 20 comprises a controller (CTL) or a processor 23 that may be constituted by any suitable **C**entral **P**rocessing **U**nit, CPU, microcontroller, **D**igital Signal **P**rocessor, DSP, etc., capable of executing a computer program comprising computer program code. The computer program may be stored in a memory (MEM) 24. The memory 24 can be any combination of a **R**ead **A**nd write **M**emory, RAM, and a **R**ead **O**nly **M**emory, ROM. The memory 24 may also comprise persistent storage, which, for example, can be any single one or combination of magnetic memory, optical memory, or solid state memory or even remotely mounted memory. The network node further comprises a communication interface (i/f) 22 arranged for establishing a communication link with other devices or nodes, such entities in the core network, the backhaul network or ECN capable routers. When the above-mentioned computer program code is run in the processor 23 of the network node, it causes the network node to receive a data packet from the transport network and forward or drop the received data packets depending on the settings of the ECN flag. If congestion is indicated by the ECN flag data packets may be dropped, if not they will be forwarded. How and with which precedence the data packets are dropped will be described closer in conjunction with figure 5 and 6.

**Figure 3** is a schematic graph illustrating the ECN marking probability depending on queue length. On the y-axis the probability for setting the ECN flag bits to 11, i.e. indicating congestion, is shown. For queue lengths over a threshold qₗ the probability for setting the ECN flag bits is 1, i.e. 100 %.

With help of **Figure 4** and **Figure 5** the method performed by the network node for controlling sending rates in the communications network 2 will be described closer. In context of the present disclosure the controlling of sending rates is realized by dropping packets according to a drop precedence value if congestion is experienced in the transport network. The method may be performed in both a **D**own**L**ink, DL, direction and in an **U**p**L**ink, UL, direction of the communications network 2 depicted in figure 1. In the DL direction, the PGW 10 (or GGSN) may implement a wide range of internal RAN drop precedence levels at the RAN layer based on bitrate policing per user bearer. The PGW 10 may also use the external DSCP drop precedence, using the AF DSCP code points as mentioned above. Those drop precedence levels at the RAN layer and/or IP layer are understood by the eNB 20, NB 30 and AP 40. The ECN may be activated for all or some entities in the transport network such as a **S**erving **G**ate**W**ay, SGW, radio network controller (RNC) or WiFi Access Controller (AC). All CAPWAP, S1-U and/or Iub packets are ECN capable, i.e. the ECN bits are set to 10 or 01. All nodes, such as ECN-aware routers, in the transport network that may be considered as a bottleneck link may be configured with a ECN threshold. If a CAPWAP, S1-U or Iub packet is experiencing congestion, i.e. the ECN threshold has been exceeded; the ECN-aware router will change the ECN bits to 11 meaning congestion encountered. With increasing queue length probability that the threshold is exceeded increase, as was explained in conjunction with figure 3.

If the ECN-aware router does not experience or encounter congestion the ECN bits will not be changed. Furthermore, the ENC functionality will also be activated on the eNB, NB or the AP which then will read the ECN bits from the CAPWAP, S1-U and Iub packets, respectively.

In figure 4 the method starts with step 100, in which the network node, such as the PGW 10 for the UL case and the eNB 20, the NB or the AP 40 for the UL case, receives data packets from the transport network. The data packet comprises a RAN header a IP header or any other known or future header comprising information about the packet drop precedence. There are several ways to realize the packet drop precedence. One way is to the DSCP as described above. Another way is to use a concept of **P**er **P**acket **O**perator **V**alue, PPOV, which is introduced in the RAN layer. Using PPOV means that a value is assigned to each packet reflecting the importance of the given packet to the operator. PPOV may be marked in the gateway by the operator. In the different network nodes of the communications network 2 the packets are handled according to their relative value. This means that in the case of a buffer build-up, packets with the lowest relative PPOV are dropped.

Furthermore, the data packet also comprises an ECN flag carrying information about congestions in the transport network. Now when the data packets are arriving at for example the eNB 20 (as the network node) the eNB will first read the ECN bits. If the ECN bits are set to 10 or 01 the data packets will be forwarded regardless of their internal and/or external drop precedence value. Thus, both data packets with high respectively low drop precedence will be forwarded with the same probability. However, data packets arriving at eNB 20 and having ECN bits set to 11 will be handled re handled based on their internal and/or external drop precedence value. For example, CAPWAP, S1-U or Iub packets with low drop precedence values have a higher probability to be forwarded while CAPWAP, S1-U or Iub packets with high drop precedence values have a lower probability to be discarded or dropped. This is illustrated in **Figure 6** which is a schematic graph showing how the packet drop probability is depending on drop precedence value or level. If N=1 a drop precedence value of 6 indicates that there is a probability of 100% that the data packet will be dropped. The packet drop probability can also vary over time in order to improve TCP response to packet drop. For instance, when the eNB 20 detects that a CAPWAP, S1-U or Iub packet with higher drop precedence should be discarded because the ECN bits are set to 11, it may initially start dropping one packet per bearer regardless if it is a TCP or UDP data packet and let time pass between each packet drop in order to avoid too many packet drops or discards per bearer at once. Thus, the network node will equally distribute the dropping of the received packets among the available sending bearers. Multiple packet discards per bearer would signal a serious congestion to the TCP sender. If the network node detects that a bearer keeps receiving packets with high drop precedence values and the ECN flag bits set to 11, it starts discarding multiple packets at once.

Turning back to figure 4, and summarizing the above paragraph, the method, after receiving the data packets, continues in step 200 with dropping the received packets if the ECN flag indicates that there is a congestion in the transport network, i.e. the ECN flag bits are set to 11. The dropping of data packets is based on the packet drop precedence value in the RAN header.

Turning to figure 5 step 200 of the method may be further divided into several sub steps 202-208. In step 202 the network node reads, for each data packet, the RAN header to determine the value for the packet drop precedence. The network node then compares, in step 204 the read packet drop precedence value with a threshold. If the packet drop precedence value is below the threshold the network node then forwards, in step 206, the data packet. If the packet drop precedence value is above the threshold the network node drops, in step 208, the data packet. How many packets that will be dropped depend on the drop precedence value and more packets will be dropped the higher the drop precedence value is.

Thus, it is believed that different embodiments have been described thoroughly for purpose of illustration and description. However, the foregoing description is not intended to be exhaustive or to limit example embodiments to the precise form disclosed. Thus, modifications and variations are possible in light of the above teachings or may be acquired from practice of various alternatives to the provided embodiments. The examples discussed herein were chosen and described in order to explain the principles and the nature of various example embodiments and its practical application to enable one skilled in the art to utilize the example embodiments in various manners and with various modifications as are suited to the particular use contemplated. The features of the embodiments described herein may be combined in all possible combinations of methods, apparatus, modules, systems, and computer program products. It should be appreciated that any of the example embodiments presented herein may be used in conjunction, or in any combination, with one another. It should be noted that the word "comprising" does not necessarily exclude the presence of other elements or steps than those listed and the words "a" or "an" preceding an element do not exclude the presence of a plurality of such elements. It should further be noted that any reference signs do not limit the scope of the example embodiments, that the example embodiments may be implemented at least in part by means of both hardware and software, and that several "means", "units" or "devices" may be represented by the same item of hardware.

The various example embodiments described herein are described in the general context of method steps or processes, which may be implemented in one aspect by a computer program product, embodied in a computer-readable medium, including computer-executable instructions, such as program code, and executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

## Claims

1. A method performed by a network node (10; 20; 30; 40) for controlling sending rates in a communications network (2), the method comprising:
- receiving (100) a data packet from a transport network, said data packet comprising information about a packet drop precedence value and an Explicit Congestion Notification, ECN, flag, comprising information about congestions in the transport network; and
- dropping (200) received data packets in the network node (10; 20; 30; 40), in response to that the ECN flag indicates that there is a congestion in the transport network and based on the packet drop precedence value.

2. The method according to claim 1, wherein the drop precedence value is carried in a Radio Access Network, RAN, header of the data packet.

3. The method according to claim 1, wherein the drop precedence value is carried in a IP header of the data packet.

4. The method according to claim 2 or 3, further comprising
- reading (202), for each data packet, the RAN or IP header to determine the packet drop precedence value,
- comparing (204) the read packet drop precedence value with a threshold; and
- forwarding (206) data packets having a packet drop precedence value below the threshold and dropping (208) data packets having a packet drop precedence value above the threshold.

5. The method according to any of claims 1 to 4, wherein the dropping of received packets in the network node (10; 20; 30; 40) is equally distributed among the available sending bearers of the network node (10; 20; 30; 40).

6. The method according to any of claims 1 to 5, wherein the ECN flag has been set by an ECN capable router (60) in the transport network.

7. The method according to any of claims 1 to 6, wherein the ECN flag comprises two bits, which are set to 11 for indicating congestion in the transport network.

8. A network node (10; 20; 30; 40) for controlling sending rates in a communications network (2), the network node (10; 20; 30; 40) comprising:
a communication interface (22) arranged for wireless communication with a transport network;
a processor (23); and
a memory (24) storing a software package comprising computer program code which, when run in the processor (23), causes the network (10; 20) to:
- receive a data packet from the transport network, said data packet comprising information about a packet drop precedence value and an Explicit Congestion Notification, ECN, flag, comprising information about congestions in the transport network; and
- drop received data packets in the network node (10; 20; 30; 40), in response to an indication by the ECN flag that there is congestion in the transport network and based on the packet drop precedence value.

9. The network node (10; 20; 30; 40) according to claim 8, wherein the drop precedence value is carried in a Radio Access Network, RAN, header of the data packet.

10. The network node (10; 20; 30; 40) according to claim 8, wherein the drop precedence value is carried in a IP header of the data packet.

11. The network node (10; 20; 30; 40) according to claim 9 or 10, which is further caused to
- read, for each data packet, the RAN or IP header to determine the packet drop precedence value,
- compare the read packet drop precedence value with a threshold; and
- forwarding data packets having a packet drop precedence value below the threshold and dropping data packets having a packet drop precedence value above the threshold.

12. The network node (10; 20; 30; 40) according to any of claims 8 to 11, which is further caused to drop the received data packets equally distributed among the available sending bearers of the network node (10; 20; 30; 40).

13. The network node (10; 20; 30; 40) according to any of claims 8 to 12, wherein the ECN flag has been set by an ECN capable router (60) in the transport network.

14. The network node (10; 20; 30; 40) according to any of claims 8 to 13, wherein the ECN flag comprises two bits, which are set to 11 for indicating congestion in the transport network.
